# EUROPEAN PATENT SPECIFICATION

(11) **EP 1 067 021 B1**
(45) Date of publication and mention of the grant of the patent: **17.09.2003**
(21) Application number: 00114665.3
(22) Date of filing: 07.07.2000
(51) Int. Cl.: B60R 11/02

(54) **Protection system for a car radio**
Schutzvorrichtung für ein Autoradio
Dispositif de protection d'un autoradio

(30) Priority: 09.07.1999 IT TO990604
(43) Date of publication of application: 10.01.2001
(73) Proprietor: FIAT AUTO S.p.A., 10135 Torino (IT)
(72) Inventor: Ferraris, Valter, 10146 Torino (IT); Tardivo, Michele, 10098 Rivoli (IT)
(74) Representative: Eccetto, Mauro

(56) References cited:
- EP-A- 0 549 541
- EP-A- 0 767 087
- GB-A- 2 319 646
- US-A- 4 759 062
- US-A- 5 870 018
- PATENT ABSTRACTS OF JAPAN vol. 1999, no. 03, 31 March 1999 (1999-03-31) & JP 10 322265 A (NILES PARTS CO LTD), 4 December 1998 (1998-12-04)
- PATENT ABSTRACTS OF JAPAN vol. 014, no. 048 (P-0997), 29 January 1990 (1990-01-29) & JP 01 276396 A (MAZDA MOTOR CORP), 6 November 1989 (1989-11-06)

## Description

The present invention relates to a protection system for a car radio.

The object of the present invention is to provide a system which discourages thefts of car radios.

In particular, the object of the present invention , is to provide a car radio which can operate solely with a vehicle which is specifically designed to accept it. More particularly, the object of the present invention is to prevent functioning of a car radio which is stolen from a vehicle, and installed in another vehicle.

For instance US-5,870,018 describes an automotive radio anti-theft device via multiple bus, according to the preamble of claim 1.

The aforementioned object is achieved by the present invention, in that it relates to a protection system for a car radio of the type described in claim 1.

The invention is now described with reference to the attached drawings, which illustrate a non-limiting embodiment, in which:
figure 1 illustrates schematically a vehicle which is provided with a protection system for a car radio, which is produced according to the dictates of the present invention;
figure 2 illustrates a first block diagram of the operations carried out by the protection system according to the present invention, for a car radio; and
figure 3 illustrates a second block diagram of the operations carried out by the protection system according to the present invention, for a car radio.

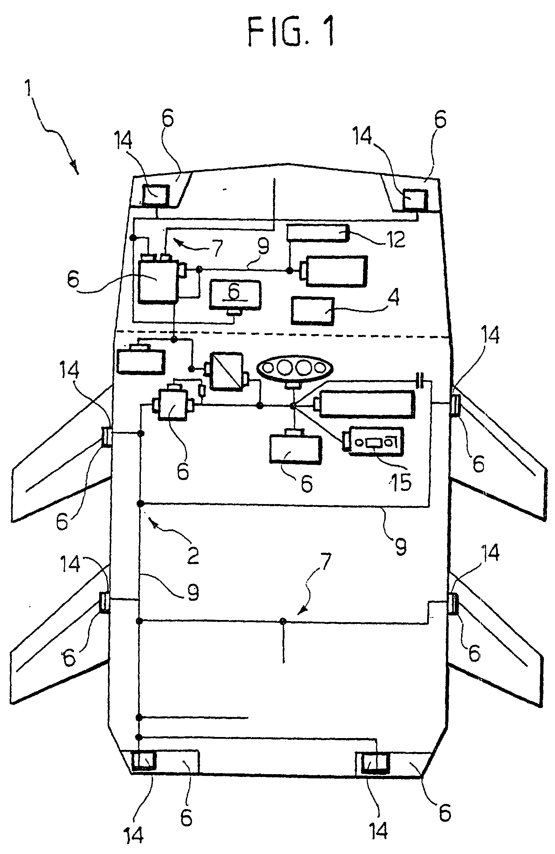

In figure 1, 1 indicates a vehicle as a whole, in particular a motor vehicle, which is provided with electric wiring 2, which is supplied by a battery 4 (shown schematically), and can supply to a plurality of electric users 6 of the vehicle.

In particular, the electric wiring 2 comprises a CAN network 7 (of a known type), which consists of a plurality of transmission lines (BUSES) 9, which communicate with a central control unit 12 (BODY COMPUTER), and can transfer control signals from and to control devices 14, which are connected to the electric users 6. As is known, use of a CAN network permits efficient remote control of the electric users 6, since the commands which are supplied to the electric users 6 pass via the BUSES 9, which can have a considerable length, whereas power is supplied to the electric users 6 by electric wiring which has a limited length. This therefore eliminates the use of numerous, long electric power cables to transfer the commands to the electric users.

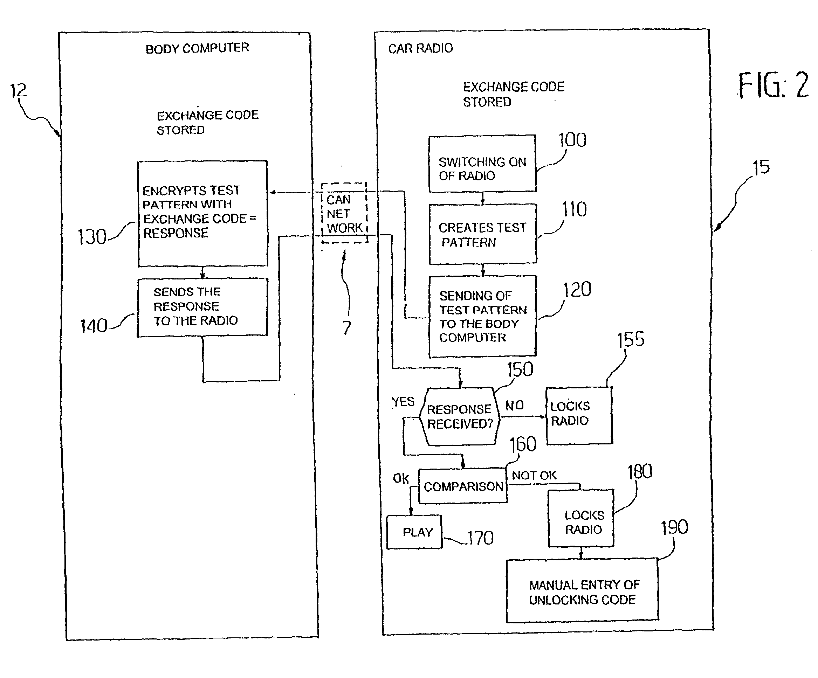

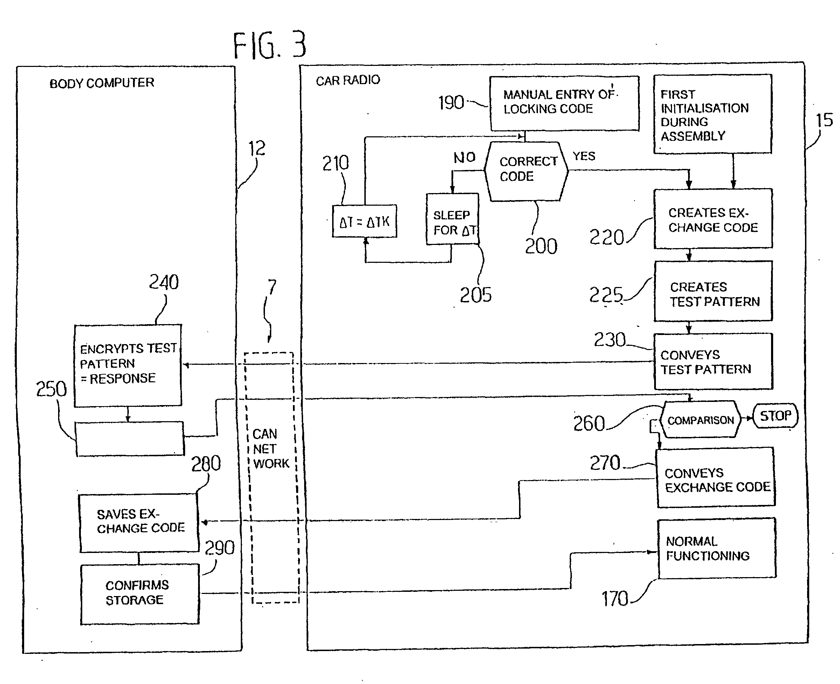

According to the present invention, a car radio 15, which is installed in the vehicle 1, is interfaced with the CAN network 7, and can carry out a step of data exchange with the BODY COMPUTER 12, in order to carry out anti-theft functions, which are illustrated hereinafter by means of figures 2 and 3.

The functions which are carried out by the car radio 15 during its normal operation are illustrated with particular reference to figure 2.

In particular, the car radio 15 and the BODY COMPUTER 12 each contain in their interior, in a memory location (not shown), a univocal identification code, which is known as the EXCHANGE CODE.

When the car radio has been switched on (block 100), including after the electric wiring 2 has been disconnected from the battery 4, and has subsequently been re-connected to the battery 4, a circuit (not shown), which is inside the car radio itself, creates a random number, which is known hereinafter as the TEST PATTERN (block 110, which follows block 100).

Block 110 is followed by a block 120, which, via the CAN network 7, conveys the TEST PATTERN previously created, to the BODY COMPUTER 12.

The BODY COMPUTER 12 receives the TEST PATTERN from the CAN network 9 (block 130), and encrypts this TEST PATTERN by means of algorithms of a known type, using the resident EXCHANGE CODE; this therefore generates a response signal, which is conveyed (block 140, which follows block 130) to the car radio 15, via the CAN network 7. If, within a pre-determined time, the car radio 15 does not receive the response signal from the BODY COMPUTER 12 (block 150), it remains locked, and will not permit entry even of an unlocking code (block 155).

The car radio 15 encrypts the TEST PATTERN generated locally in the car radio (block 110) by means of the same algorithm used in the BODY COMPUTER, using the EXCHANGE CODE which is resident in the car radio; this therefore generates a local response signal, which, in the presence of a response signal received, is compared (block 160, which follows block 150) with the response signal obtained from the BODY COMPUTER, and received by the car radio (block 150).

If the result of the comparison is positive (i.e. if the EXCHANGE CODE which is present in the car radio 15 coincides with the EXCHANGE CODE which is present in the BODY COMPUTER 12), the block 160 is followed by a block 170, which makes possible the normal functions of the car radio, otherwise (EXCHANGE CODE present in the car radio 15, which is different from the EXCHANGE CODE which is present in the BODY COMPUTER 12) the car radio is locked (block 180, which follows block 160), and a step of entry of an unlocking code can be activated (block 190, which follows block 180).

Figure 3 illustrates a block diagram relative to the operations which are carried out by the car radio 15, after reaching block 190, which is dedicated to entry of an unlocking code. As previously stated, block 190 is reached when the identification code of the car radio 15 does not coincide with the identification code of the BODY COMPUTER 12; this situation occurs typically in the following cases:
when the car radio 15 has been fitted on another car which is provided with a CAN network, since the new car radio contains a resident EXCHANGE CODE which is different from that which is present in the BODY COMPUTER; and
after replacement (or RESETTING) of the BODY COMPUTER 12, since the BODY COMPUTER contains a resident EXCHANGE CODE which is different from that which was present in the BODY COMPUTER which was previously operating.

In block 190 there is entry of an unlocking code (MASTER CODE), which is preferably, but not necessarily, entered by means of a numerical keypad (not shown), which is associated with the car radio 15.

Block 190 is followed by a block 200, which checks the correctness of the unlocking code entered; if the result is positive (MASTER CODE entered and recognised as correct), block 200 is followed by a block 220, otherwise (MASTER CODE entered, but recognised as incorrect), block 200 is followed by a block 205, which locks the car radio for a time interval ΔT. Block 205 is followed by a block 210, which prolongs the length of the time interval ΔT; from block 210, there is return to block 200. By this means, when a car radio which has an EXCHANGE CODE which is different from that which is stored in the BODY COMPUTER is switched on, use of the car radio is inhibited (block 180), and an unlocking step is necessarily activated (block 190). When unsuccessful attempts to enter the unlocking code are repeated, the unlocking step leads to de-activation of the car radio for increasing successive time intervals (blocks 205 and 210).

If the BODY COMPUTER does not yet contain an EXCHANGE CODE stored, the cycle starts from block 220, and an unlocking code is not requested. This takes place in correspondence with the step of initial installation of the car radio (at the end of the assembly line), and before the car radio is switched on.

By means of a random generator of numbers, block 220 creates an EXCHANGE CODE, and is followed by a block 225, which creates a new TEST PATTERN. Block 225 is followed by a block 230, which conveys the TEST PATTERN created in the previous block to the BODY COMPUTER 12, via the CAN network 7.

The TEST PATTERN is received from the BODY COMPUTER 12, which encrypts this TEST PATTERN (block 240) by means of algorithms of a known type, using a constant (and in particular not using the EXCHANGE CODE, which may not yet be present, or could be different from that which is associated with the car radio); this therefore generates a further response signal, which is conveyed (block 250, which follows block 240) to the car radio 15, via the CAN network 7.

If, within a pre-determined time, the car radio 15 does not receive the response signal from the BODY COMPUTER 12, it remains locked, and does not permit entry even of an unlocking code.

The car radio 15 encrypts the TEST PATTERN generated in the car radio (block 220), with the same algorithm used in the BODY COMPUTER, using the same constant as that used in the BODY COMPUTER; this therefore generates a further local response signal, which is compared (block 260) with the further response signal obtained from the BODY COMPUTER 12, and received from the car radio.

If the signals coincide, a correct connection between the car radio 15 and the BODY COMPUTER 12, and satisfactory functioning of the BODY COMPUTER 12, are detected via the CAN network 7; in this case, block 260 is followed by a block 270, which, via the CAN network 7, conveys the EXCHANGE CODE of the car radio to the BODY COMPUTER 12, where it is stored (block 280) and subsequently used for the operations described by the block diagram in figure 2. In particular, block 280 is followed by a block 290, which conveys to the car radio confirmation of the storage, and activates the subsequent procedures for normal operation (block 170, which follows block 290). If the signals do not coincide, block 260 ends the procedures for entry and storage of a new EXCHANGE CODE, and the car radio continues to be locked.

The foregoing description makes apparent the advantages of the present invention, since the car radio 15 automatically continues to be locked in the event of failure to connect to the CAN network (block 150 does not detect any response signal). If the car radio 15 is connected to the CAN network, but the EXCHANGE CODES present in the BODY COMPUTER 12 and in the car radio 15 do not coincide, the car radio continues to be locked, and can be unlocked only by entering the unlocking code (MASTER CODE). This therefore discourages thefts of car radios, since the latter can operate only in a car which is provided with a CAN network, and if a CAN network is present, they can operate only if the EXCHANGE CODES of the car radio and of the BODY COMPUTER coincide. Otherwise, the unlocking code must be entered.

Furthermore, if the battery is disconnected from, and subsequently connected to, the electrical system of the vehicle, it is not necessary to re-enter the unlocking code, since comparison of the EXCHANGE CODES which are present in the BODY COMPUTER and in the car radio takes place automatically. This makes it possible to avoid re-entering the unlocking code after car maintenance work has been carried out, and thus to prevent the many disadvantages which are caused by loss of a code by the final user.

## Claims

1. Protection system for a car radio, in which a vehicle, in particular a motor vehicle, is provided with electric wiring (2), comprising a CAN network (7), consisting of a plurality of transmission lines 9), which communicate with a central control unit (12) and can transfer control signals from and to control devices (14), which are connected to electrical users of the vehicle (6), whereby said car radio (15), which is installed in the vehicle (1), is interfaced with the CAN network (7), in order to permit exchange of data with the said central control unit (12), and to carry out an anti-theft function for the car radio itself, according to which functioning of the said car radio (15) is inhibited (155,180) if correct exchange of data (150,160) is lacking;
the said car radio (15) being provided with a univocal identification code, and the said central control unit (12) is provided with a univocal identification code; the said car radio (15) being provided with means (150) which can detect data on the said CAN line, and means (160) for comparison, which, after data has been exchanged on the said CAN line (7), can compare data correlated to codes which are resident in the car radio and in the central control unit (12), in order to permit activation (170) of the car radio itself;
**characterised in that** said car radio (15) comprises:
- random generator means (110), which can create a random number after the said car radio (15) has been switched on (100);
- transmission means (120), which can convey the said random number to the said central control unit (12), via the said CAN network (7);
the said central control unit (12) comprising:
reception means (130) for the said random number, which can encrypt the said random number by means of algorithms, using the said identification code, by generating a response signal which is conveyed (140) to the car radio (15) via the said CAN network (7); the said car radio (15) receiving (150) the said response signal;
the said car radio (15) also being able to encrypt the said random number with the same algorithm used in the central control unit (12), and using the identification code which is resident in the car radio, in order to generate a local response signal;
the said comparison means comparing (160) the said response signal obtained from the central control unit (12) with the said local response signal generated in the said car radio (15).

2. System according to claim 1, **characterised in that** as a result of lack of correspondence between the data correlated to the codes which are resident in the car radio and in the central control unit (12), the said comparison means (160) select locking means (180,190), which can inhibit the functioning of the said car radio (15).

3. System according to claim 1 or 2, **characterised in that** if the said means (150) which can detect data on the CAN network (7) detect the absence of a response signal obtained from the central control unit (12) to the car radio (15), locking means (155) are selected, which can inhibit the functioning of the said car radio (15), without permitting activation of a step of entry of an unlocking code.

4. System according to claim 2, **characterised in that** the said locking means (180, 190) can permit introduction of an unlocking code ;
the said locking means (180, 190) cooperate with second comparison means (200), which check the correctness of the unlocking code entered, and increase (210, 205) the time interval for de-activation of the car radio (15), as a result of entry of incorrect unlocking codes.

5. System according to claim 4, **characterised in that** as a result of entry of a valid unlocking code the said locking means (180, 190) can activate means for creation (220) of an identification code, and means for storage (280) of the said identification code, inside the said control unit (12).

6. System according to claim 5, **characterised in that** the said means for creation (220) of an identification code are selected automatically in correspondence with the step of initial installation of the car radio, and of initial switching on of the car radio.

7. System according to claim 5 or claim 6, **characterised in that** it comprises:
- further random generator means (225), which can create a further random number), as a result of introduction of a valid unlocking code;
- transmission means (230), which can convey the said further random number to the said central control unit (12), via the said CAN network (7);
the said central control unit (12) comprising:
- reception means (240) for the said further random number, which can encrypt the said random number by means of algorithms using a constant, and generating a further response signal which is conveyed (250) to the car radio (15) via the said CAN network (7); the said car radio (15) receiving (260) the further response signal;
the said car radio (15) also being able to encrypt the said further random number, with the same algorithm used in the central control unit (12), and using the same constant resident in the control unit in order to generate a further local response signal;
the said car radio (15) comprising further comparison means which can compare (260) the said further response signal obtained from the central control unit (12) with the said further local response signal generated in the said car radio (15), in order to permit activation of the said storage means (280) .

## Patentansprüche

1. Schutzsystem für ein Autoradio, bei dem ein Fahrzeug, insbesondere ein Kraftfahrzeug, mit einer elektrischen Verdrahtung (2) versehen ist, die ein CAN-Netzwerk (7) aufweist, das aus mehreren Übertragungsleitungen (9) besteht, die mit einer Zentralsteuereinheit (12) kommunizieren und Steuersignale von Steuervorrichtungen (14), welche mit elektrischen Verbrauchern (6) des Fahrzeugs verbunden sind, und zu diesen übertragen können, wobei das Autoradio (15), das in dem Fahrzeug (1) installiert ist, mit dem CAN-Netzwerk (7) verbunden ist, um das Austauschen von Daten mit der Zentralsteuereinheit (12) zu ermöglichen und eine Diebstahlverhinderungsfunktion für das Autoradio selbst auszuführen, wodurch das Funktionieren des Autoradios (15) unterbunden wird (155, 180), falls kein richtiger Austausch von Daten (150, 160) vorhanden ist,
wobei das Autoradio (15) mit einem eindeutigen Identifikationscode versehen ist und die Zentralsteuereinheit (12) mit einem eindeutigen Identifikationscode versehen ist, das Autoradio (15) mit einer Einrichtung (150), die Daten auf der CAN-Leitung erfassen kann, und einer Einrichtung (160) zum Vergleich, die, nachdem Daten auf der CAN-Leitung (7) ausgetauscht worden sind, mit Codes, die in dem Autoradio und der Zentralsteuereinheit (12) resident sind, korrelierte Daten vergleichen kann, um eine Aktivierung (170) des Autoradios selbst zu ermöglichen,
**dadurch gekennzeichnet, daß** das Autoradio (15) aufweist:
eine Zufallsgeneratoreinrichtung (110), die eine Zufallszahl erzeugen kann, nachdem das Autoradio (15) eingeschaltet worden ist (100),
eine Übertragungseinrichtung (120), die die Zufallszahl über das CAN-Netzwerk (7) zu der Zentralsteuereinheit (12) übermitteln kann,
wobei die Zentralsteuereinheit (12) aufweist:
eine Empfangseinrichtung (130) für die Zufallszahl, die die Zufallszahl durch einen Algorithmus unter Verwendung des Identifikationscodes verschlüsseln kann, indem ein Antwortsignal erzeugt wird, das über das CAN-Netzwerk (7) zum Autoradio (15) übermittelt wird (140), wobei das Autoradio (15) das Antwortsignal empfängt (150),
wobei das Autoradio (15) auch in der Lage ist, die Zufallszahl mit dem gleichen Algorithmus zu verschlüsseln, der in der Zentralsteuereinheit (12) verwendet wird, und den im Autoradio residenten Identifikationscode verwendet, um ein lokales Antwortsignal zu erzeugen,
wobei die Vergleichseinrichtung das von der Zentralsteuereinheit (12) erhaltene Antwortsignal mit dem im Autoradio (15) erzeugten lokalen Antwortsignal vergleicht (160).

2. System nach Anspruch 1, **dadurch gekennzeichnet, daß** infolge einer fehlenden Übereinstimmung zwischen den Daten, die mit den im Autoradio und in der Zentralsteuereinheit (12) residenten Codes korreliert sind, die Vergleichseinrichtung (160) die Sperreinrichtung (180, 190) auswählt, welche das Funktionieren des Autoradios (15) unterbinden kann.

3. System nach Anspruch 1 oder 2, **dadurch gekennzeichnet, daß** wenn die Einrichtung (150), die Daten auf dem CAN-Netzwerk (7) erfassen kann, erkennt, daß vom Autoradio (15) kein Antwortsignal von der Zentralsteuereinheit (12) erhalten wurde, eine Sperreinrichtung (155) ausgewählt wird, welche das Funktionieren des Autoradios (15) unterbinden kann, ohne daß die Aktivierung eines Schritts zur Eingabe eines Entsperrcodes zugelassen wird.

4. System nach Anspruch 2, **dadurch gekennzeichnet, daß** die Sperreinrichtung (180, 190) das Eingeben eines Entsperrcodes zulassen kann,
wobei die Sperreinrichtung (180, 190) mit der zweiten Vergleichseinrichtung (200) zusammenwirkt, die die Richtigkeit des eingegebenen Entsperrcodes prüft, und das Zeitintervall für das Deaktivieren des Autoradios (15) verlängert (210, 205), wenn inkorrekte Entsperrcodes eingegeben wurden.

5. System nach Anspruch 4, **dadurch gekennzeichnet, daß** infolge der Eingabe eines gültigen Entsperrcodes die Sperreinrichtung (180, 190) eine Einrichtung zum Erzeugen (220) eines Identifikationscodes und eine Einrichtung zum Speichern (280) des Identifikationscodes innerhalb der Steuereinheit (12) aktivieren kann.

6. System nach Anspruch 5, **dadurch gekennzeichnet, daß** die Einrichtung zum Erzeugen (220) eines Identifikationscodes automatisch entsprechend dem Schritt der anfänglichen Installation des Autoradios und dem anfänglichen Einschalten des Autoradios ausgewählt wird.

7. System nach Anspruch 5 oder 6, **dadurch gekennzeichnet, daß** es weiter aufweist:
eine weitere Zufallsgeneratoreinrichtung (225), die infolge der Eingabe eines gültigen Entsperrcodes eine weitere Zufallszahl erzeugen kann,
eine Übertragungseinrichtung (230), die die weitere Zufallszahl über das CAN-Netzwerk (7) zu der Zentralsteuereinheit (12) übermitteln kann,
wobei die Zentralsteuereinheit (12) aufweist:
eine Empfangseinrichtung (240) für die weitere Zufallszahl, die die Zufallszahl durch Algorithmen unter Verwendung einer Konstanten verschlüsseln kann und ein weiteres Antwortsignal erzeugt, das über das CAN-Netzwerk (7) zum Autoradio (15) übermittelt wird (250), wobei das Autoradio (15) das weitere Antwortsignal empfängt (260),
wobei das Autoradio (15) auch in der Lage ist, die weitere Zufallszahl mit dem gleichen Algorithmus zu verschlüsseln, der in der Zentralsteuereinheit (12) verwendet wird, und die gleiche Konstante, die in der Steuereinheit resident ist, verwendet, um ein weiteres lokales Antwortsignal zu erzeugen,
wobei das Autoradio (15) weiterhin eine Vergleichseinrichtung aufweist, die das von der Zentralsteuereinheit (12) erhaltene weitere Antwortsignal mit dem im Autoradio (15) erzeugten weiteren lokalen Antwortsignal vergleichen kann (260), um das Aktivieren der Speichereinrichtung (280) zu ermöglichen.

## Revendications

1. Dispositif de protection pour un autoradio, dans lequel un véhicule, en particulier un véhicule à moteur, est équipé d'un câblage électrique (2), comprenant un réseau CAN (7) consistant en une pluralité de lignes de transmission (9) qui communiquent avec une unité de commande centrale (12) et peuvent transférer des signaux de commande à partir de et vers des dispositifs de commande (14) qui sont raccordés à des utilisateurs électriques du véhicule (6), en sorte que ledit autoradio (15), qui est installé dans le véhicule (1), est interfacé avec le réseau CAN (7) afin de permettre un échange de données avec ladite unité de commande centrale (12) et d'exercer une fonction antivol pour l'autoradio lui-même, selon laquelle le fonctionnement dudit autoradio (15) est bloqué (155, 180) en l'absence d'échange correct des données (150, 160) ;
ledit autoradio (15) étant équipé d'un code d'identification univocal et ladite unité de commande centrale (12) est équipée d'un code d'identification univocal ; ladit autoradio (15) étant équipé de moyens (150) pouvant détecter des données sur ladite ligne CAN, et de moyens (160) de comparaison, qui, une fois que des données ont été échangées sur la ligne CAN (7), peuvent comparer des données corrélées aux codes résidents de l'autoradio et de l'unité de commande centrale (12) afin de permettre l'activation (170) de l'autoradio lui-même ;
**caractérisé en ce que** ledit autoradio (15) comprend en outre :
- des moyens générateurs aléatoires (110) qui peuvent créer un nombre aléatoire dès la mise en marche (100) dudit autoradio (15) ;
- des moyens de transmission (120) qui peuvent transférer ledit nombre aléatoire à ladite unité de commande centrale (12), via le réseau CAN (7) ;
- ladite unité de commande centrale (12) comprenant :
- des moyens de réception (130) pour ledit nombre aléatoire, qui peuvent crypter ledit nombre aléatoire au moyen d'algorithmes, en utilisant ledit code d'identification, par production d'un signal de réponse qui est transmis (140) à l'autoradio (15) via ledit réseau CAN (7) ; ledit autoradio (15) recevant (150) ledit signal de réponse ;
ledit autoradio (15) étant également capable de crypter ledit nombre aléatoire avec le même algorithme utilisé dans l'unité de commande centrale (12), et utilisant le code d'identification résident dans l'autoradio, afin de produire un signal de réponse local ;
lesdits moyens de comparaison comparant (160) ledit signal de réponse provenant de l'unité de commande centrale (12) avec ledit signal de réponse local produit dans ledit autoradio (15).

2. Dispositif selon la revendication 1, **caractérisé en ce qu'**en raison d'une absence de correspondance entre les données corrélées aux codes résidents de l'autoradio et de l'unité de commande centrale (12), lesdits moyens de comparaison (160) sélectionnent des moyens de verrouillage (180, 190) qui peuvent verrouiller le fonctionnement dudit autoradio (15).

3. Dispositif selon la revendication 1 ou 2, **caractérisé en ce que**, si lesdits moyens (150) qui peuvent détecter les données sur le réseau CAN (7) détectent l'absence d'un signal de réponse provenant de l'unité de commande centrale (12) vers l'autoradio (15), des moyens de verrouillage (155) sont sélectionnés, qui peuvent verrouiller le fonctionnement dudit autoradio (15), sans permettre l'activation d'une étape d'entrée d'un code de déverrouillage.

4. Dispositif selon la revendication 2, **caractérisé en ce que** lesdits moyens de verrouillage (180, 190) peuvent permettre l'introduction d'un code de déverrouillage ;
lesdits moyens de verrouillage (180, 190) coopèrent avec des seconds moyens de comparaison (200) qui vérifient l'exactitude du code de déverrouillage saisi, et augmentent (210, 205) l'intervalle de temps pour la désactivation de l'autoradio (15), du fait de la saisie de codes de déverrouillage incorrects.

5. Dispositif selon la revendication 4, **caractérisé en ce qu'**en raison de la saisie d'un code de déverrouillage valide, lesdits moyens de verrouillage (180, 190) peuvent activer des moyens pour la création (220) d'un code d'identification, et des moyens de stockage (280) dudit code d'identification, à l'intérieur de ladite unité de commande centrale (12).

6. Dispositif selon la revendication 5, **caractérisé en ce que** lesdits moyens pour la création (220) d'un code d'identification sont sélectionnés automatiquement en correspondance avec l'étape d'installation initiale de l'autoradio, et de mise en marche initiale de l'autoradio.

7. Dispositif selon la revendication 5 ou 6, **caractérisé en ce qu'**il comprend :
- des moyens générateurs aléatoires additionnels (225) qui peuvent créer un nombre aléatoire additionnel, du fait de l'introduction d'un code de déverrouillage valide ;
- des moyens de transmission (230) qui peuvent transférer ledit nombre aléatoire additionnel vers ladite unité de commande centrale (12), via ledit réseau CAN (7) ;
ladite unité de commande centrale (12) comprenant :
- des moyens de réception (240) pour ledit nombre aléatoire additionnel, qui peuvent crypter ledit nombre aléatoire au moyen d'algorithmes utilisant une constante et produisant un signal de réponse additionnel qui est transmis (250) à l'autoradio (15) via le réseau CAN (7) ; ledit autoradio (15) recevant (260) le signal de réponse additionnel ;
ledit autoradio (15) étant également capable de crypter ledit nombre aléatoire additionnel, avec le même algorithme utilisé dans l'unité de commande centrale (12) et utilisant la même constante résidente dans l'unité de commande afin de produire un signal de réponse local additionnel ;
ledit autoradio (15) comprenant des moyens de comparaison additionnels qui peuvent comparer (260) ledit signal de réponse additionnel provenant de l'unité de commande centrale (12) avec ledit signal de réponse local additionnel produit dans ledit autoradio (15) afin de permettre l'activation desdits moyens de stockage (280).
